# FASCICULE DE BREVET EUROPEEN

(11) **EP 2 666 688 B1**
(45) Date de publication et mention de la délivrance du brevet: **23.12.2015**
(21) Numéro de dépôt: 13167133.1
(22) Date de dépôt: 08.05.2013
(51) Int. Cl.: B60T 13/74, B60T 8/40

(54) **Système de freins de véhicule a servomoteur électrique et piston de réaction hydraulique**
Bremssystem eines Fahrzeugs mit elektrischem Servomotor und hydraulischem Reaktionskolben
Vehicle brake system with electric servomotor and hydraulic reaction piston

(30) Priorité: 23.05.2012 FR 1254710
(43) Date de publication de la demande: 27.11.2013
(73) Titulaire: ROBERT BOSCH GMBH, 70442 Stuttgart (DE)
(72) Inventeur: Richard, Philippe, 77500 Chelles (FR); Gaffe, Francois, 44420 La Turballe (FR); Cagnac, Bastien, 60660 Cramoisy (FR)

(56) Documents cités:
- EP-A1- 2 000 376
- FR-A1- 2 860 474

## Description

### Domaine de l'invention

La présente invention se rapporte à un système de freins de véhicule à servomoteur électrique comprenant :
- un maître-cylindre équipé d'un piston primaire délimitant dans celui-ci une chambre, reliée par un circuit de liquide de frein aux cylindres de freins de roues, et
- un servomoteur électrique avec un piston d'actionneur agissant sur le piston primaire,
- une tige de commande reliée à la pédale de frein et déplaçant un piston plongeur pour actionner le maître-cylindre avec le cas échéant l'assistance du servomoteur électrique,
- le mouvement de la tige de commande étant détecté par un capteur qui informe le circuit de commande du servomoteur électrique,
- le maître-cylindre, le servomoteur et la tige de commande étant alignés sur un axe.

### Etat de la technique

Les systèmes de freins de véhicule équipés d'un servomoteur électrique sont connus de manière générale, par exemple selon le document EP-A-2000376, qui décrit le préambule de la revendication 1.

Un tel servomoteur électrique est équipé d'un disque de réaction dont la sensibilité est difficile à régler et en particulier cette sensibilité réalisée par le disque de réaction dépend de la température extérieure. Un autre inconvénient est celui du coût du disque de réaction.

### But de l'invention

La présente invention a pour but de développer un système de freins à servomoteur électrique et réaction hydraulique qui soit indépendant de la température, d'une réalisation moins complexe que les réalisations connues, d'une fiabilité et d'une endurance plus grande que celle équipée d'un disque de réaction.

### Exposé et avantages de l'invention

A cet effet, la présente invention a pour objet un système de freins de véhicule à servomoteur électrique du type défini ci-dessus, caractérisé en ce que
- le piston primaire délimitant la chambre primaire dans le maître-cylindre est formé d'un corps
   * se prolongeant, côté extérieur du maître-cylindre, par une jupe cylindrique formant une chambre extérieure, logeant un ressort de réaction dont une extrémité est appuyée contre un organe de retenue solidaire de la jupe,
   * comportant un alésage axial traversant, reliant le fond de la chambre extérieure et la chambre primaire,
- le piston d'actionneur coopérant directement avec la jupe pour pousser le piston primaire,
- un piston de réaction hydraulique,
   * logé dans l'alésage du corps du piston primaire,
   * portant solidairement, côté extérieur, un poussoir axial,
      ** mini d'une butée contre laquelle s'appuie l'autre extrémité du ressort de réaction,
      ** cette butée s'appuyant contre le fond de la chambre extérieure pour pousser le piston primaire ou être poussée par celui-ci.

Le système de freins selon l'invention tel que défini ci-dessus a l'avantage d'une réalisation particulièrement simple et d'un fonctionnement indépendant de la température extérieure pour la sensation de la pédale. Cette solution est particulièrement fiable puisqu'elle ne comporte pas de disque de réaction, ce dernier étant en général en une matière caoutchouteuse.

Suivant une caractéristique particulièrement avantageuse, le ressort de réaction se compose d'un ressort principal et d'un ressort auxiliaire combinés en série, séparés l'un de l'autre par un appui flottant, mobile par rapport à une butée du piston primaire pour limiter la course de détente du ressort principal, le ressort auxiliaire étant de dureté réduite par rapport à celle du ressort principal pour être comprimé avant le ressort principal. Le ressort de réaction composé ainsi d'un ressort auxiliaire avec interposition d'un appui flottant pour compenser la traînée du frein contre le disque de frein sans que cela ne se répercute sur la sensation de pédale.

Suivant une autre caractéristique avantageuse, l'organe de retenue est un disque traversé par le poussoir particulièrement intéressant si suivant une autre caractéristique avantageuse, le poussoir comporte un épaulement coopérant avec l'organe de retenue pour définir une position extrême de fin de course du piston de réaction.

Suivant une autre caractéristique avantageuse, la butée comporte une collerette coopérant avec l'appui flottant à la compression du ressort auxiliaire pour limiter la compression du ressort auxiliaire et s'appuyer alors directement contre l'appui flottant.

### Dessins

La présente invention sera décrite ci-après de manière plus détaillée à l'aide de deux modes de réalisation d'un système de freins équipé d'un servomoteur électrique et d'un piston de réaction hydraulique représentés très schématiquement dans les dessins annexés dans lesquels :
- la figure 1 est une vue en coupe d'un système de freins composé d'un maître-cylindre et d'un servofrein électrique selon un premier mode de réalisation de l'invention,
- la figure 1A est une vue partielle de la figure 1 limitée au maître-cylindre et ai piston de réaction hydraulique,
- la figure 2 est une vue schématique d'un second mode de réalisation d'un système de freins à servomoteur électrique selon l'invention,
- la figure 2A est une vue partielle de la figure 2 limitée au maître-cylindre et au piston de réaction,
- la figure 3 est un graphique donnant la caractéristique force/pression en fonction de la force appliquée en entrée sur la tige de commande de différents systèmes de freins,
- les figures 4-10 montrent schématiquement différents états de fonctionnement du système de freins selon la figure 2 :

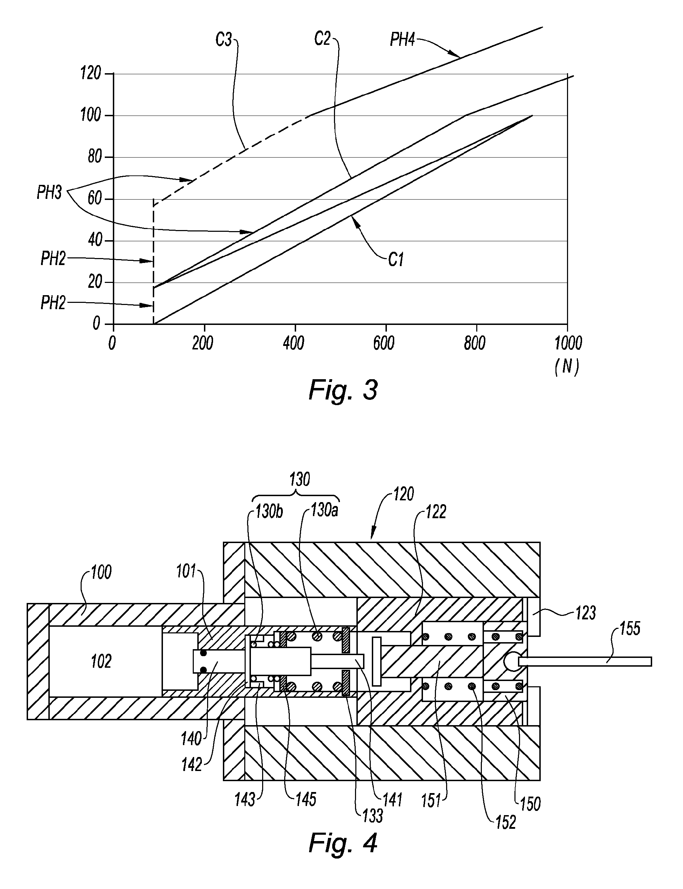

   - la figure 4 montre une action de freinage au début de la phase de compensation de la traînée,

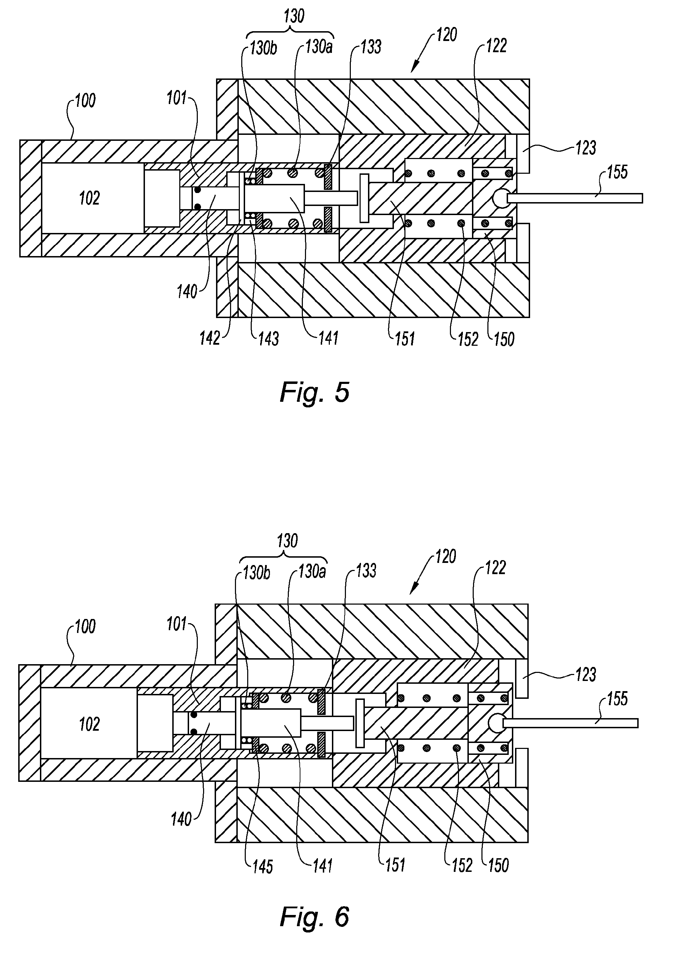

   - la figure 5 montre la fin de la phase de compensation de la traînée,
   - la figure 6 montre le passage du saut,

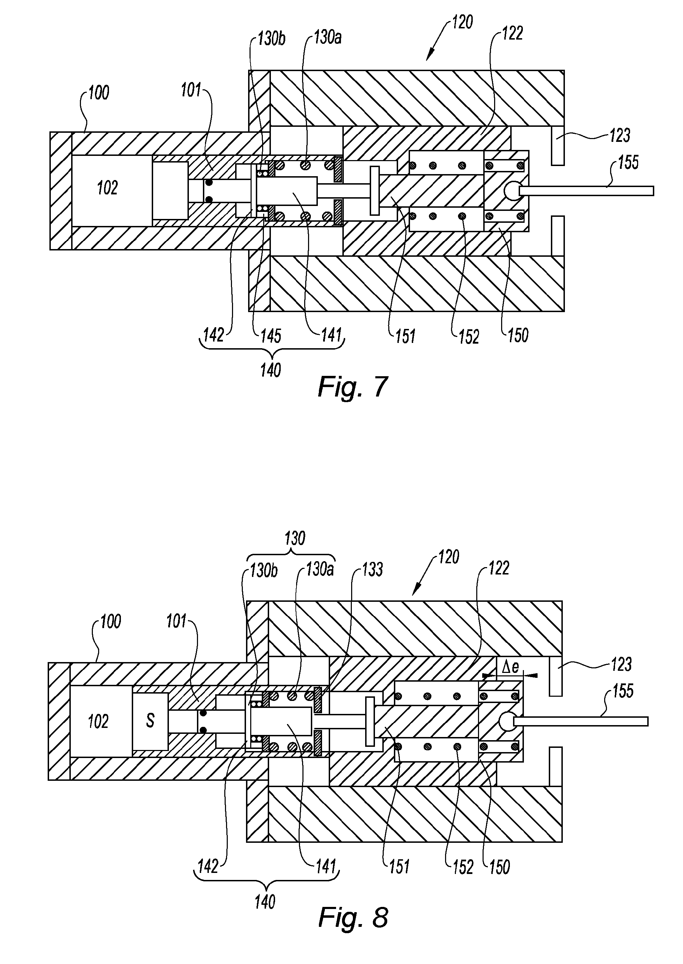

   - la figure 7 montre l'application d'un effort violent sur la pédale de frein et la tige de commande,
   - la figure 8 montre l'application d'une action modérée sur la pédale de frein,

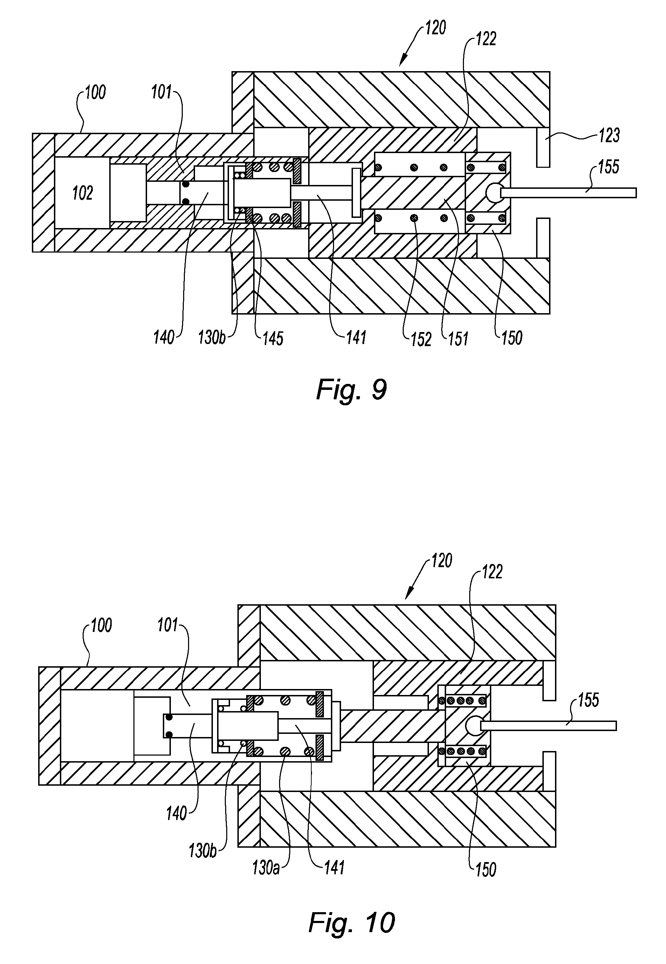

   - la figure 9 montre la mise en oeuvre de l'assistance au freinage,
   - la figure 10 montre le mode de secours avec action directe de la pédale de frein sur le maître-cylindre.

### Description de modes de réalisation de l'invention

La description des différents modes de réalisation sera faite ci-après dans le cas général d'un maître-cylindre 100 combiné à un servofrein électrique 120, le maître-cylindre pouvant être un maître-cylindre simple c'est-à-dire, alimentant un seul circuit de frein ou un maître-cylindre tandem alimentant deux circuits de frein. Le piston 101 de ce maître-cylindre sera appelé primaire, par convention, et cela qu'il s'agisse du seul piston du maître-cylindre simple ou du premier piston (piston primaire) du maître-cylindre tandem. Ce piston primaire 101 délimite dans le maître-cylindre 100 une chambre 102 appelée chambre primaire pour l'identifier plus facilement, que cette chambre soit la seule chambre du maître-cylindre simple ou effectivement la chambre primaire du maître-cylindre tandem.

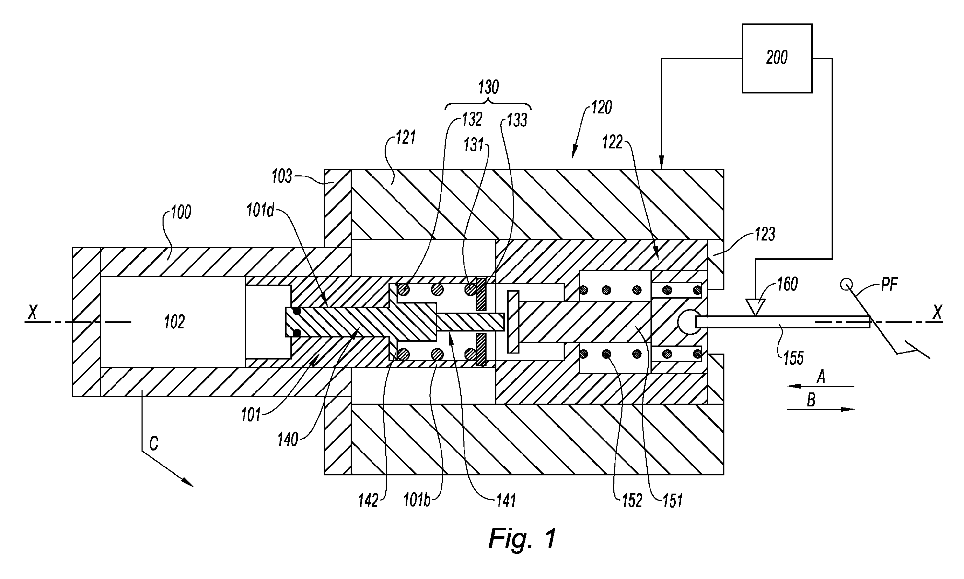

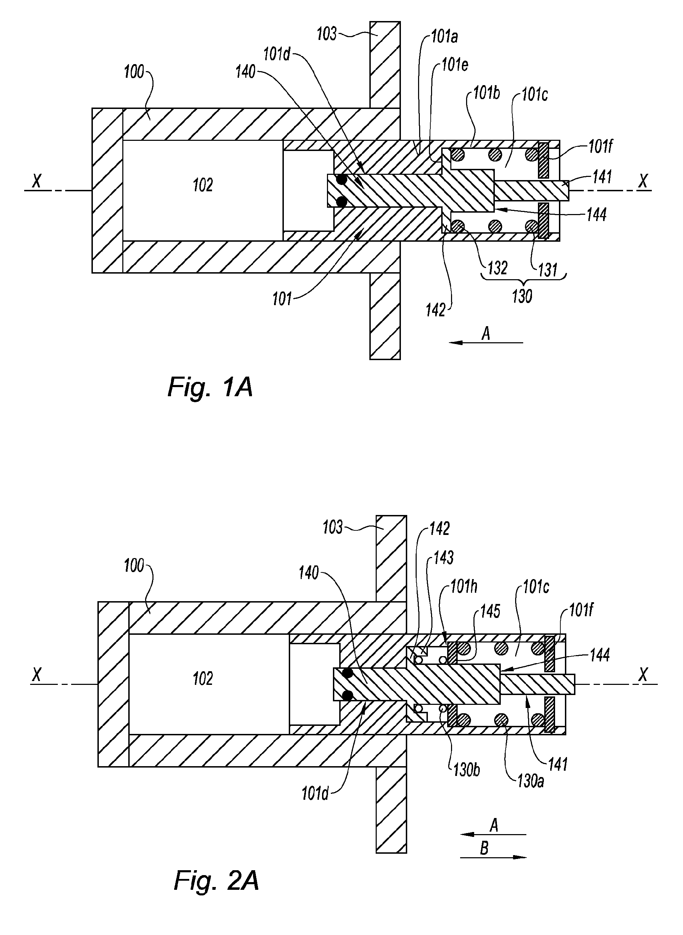

Selon les figures 1, 1A, un premier mode de réalisation d'un système de freins de véhicule selon l'invention se compose d'un maître-cylindre 100 combiné à un servomoteur électrique 120, l'ensemble étant aligné sur l'axe xx suivant lequel se déplacent les différents éléments mobiles de cette combinaison.

Le maître-cylindre 100 comporte un piston 101 logé dans le cylindre et y délimitant une chambre primaire 102 alimentant un circuit de frein C relié aux freins des roues non représentés pour leur fournir du liquide hydraulique sous pression. Le maître-cylindre 100 est alimenté en liquide de frein par un réservoir non représenté. Ces différents moyens connus de manière générale ne nécessitent pas d'explications détaillées.

Le fonctionnement de l'installation est géré par un circuit de commande 200 recevant des signaux pour commander notamment le servomoteur 120.

Selon la figure 1A, le piston primaire 101 se compose d'un corps 101a constituant le piston proprement dit délimitant la chambre primaire 102 du côté intérieur du maître-cylindre. Du côté extérieur, le corps 101a du piston primaire se poursuit par une jupe 101b délimitant une chambre 101c ouverte vers l'extérieur et dont le fond 101e est constitué par le corps du piston primaire. Le corps est traversé par un alésage axial 101d débouchant dans la chambre extérieure 101c et dans la chambre primaire 102. La chambre extérieure 101c loge un ressort de réaction 130 en forme de ressort hélicoïdal venant près de la paroi intérieure de la jupe 101b. Ce ressort de réaction 130 est retenu dans la chambre extérieure par une butée 101f solidaire de la jupe 101b contre laquelle s'appuie son extrémité 131.

Le piston primaire 101 loge un piston de réaction 140 coulissant dans l'alésage axial 101d. Le piston de réaction 140 se poursuit côté extérieur par un poussoir axial 141 et il comporte une butée 142 par laquelle le piston de réaction 140 peut s'appuyer contre le corps 101a du piston primaire 101 ou réciproquement par lequel le piston primaire 101 peut s'appuyer contre le piston de réaction 140. La butée 142 du piston de réaction reçoit l'autre extrémité 132 du ressort de réaction 130. Le ressort de réaction 130 qui est un ressort hélicoïdal de compression, plaque ainsi la butée 142 du piston de réaction 140 contre le fond 101e du corps du piston primaire 101 en l'absence d'autres efforts exercés sur le piston de réaction 140. Le poussoir du piston de réaction 140 comporte un épaulement 144 destiné à limiter la course du piston 140 dans la direction B. Ainsi, le piston de réaction 140, repoussé dans la direction B, ne pourra l'être au-delà de la butée 101f que rencontrera son épaulement 144.

Les différents joints du piston primaire 101 et du piston de réaction 140 ne sont pas représentés.

Selon la figure 1, le maître-cylindre 100 est combiné à un servomoteur électrique 120 schématisé simplement par son corps 121 fixé à la bride 103 du maître-cylindre 100 et constituant le stator du moteur. Le servomoteur 120 comporte un piston d'actionneur 122 commandé d'une manière non représentée, par exemple par une liaison de type vis/écrou comme cela est par exemple décrit dans le document FR 03 11580. Le mode de transmission mécanique du mouvement entraînant le piston d'actionneur 122 n'a pas lieu d'être décrit de manière précise ici, car seul importe le fait que le piston d'actionneur 122 est commandé par le servomoteur 120 pour se déplacer suivant l'axe xx de la droite vers la gauche (flèche A) pour agir sur le piston primaire 101 et assister le freinage.

La liaison d'entraînement du piston d'actionneur 122 est une liaison unidirectionnelle ou bidirectionnelle. Dans le premier cas, le retour du piston d'actionneur 122 à la fin du freinage est assuré par les forces de rappel, notamment les forces hydrauliques agissant sur le piston d'actionneur 122. Dans le second cas, le retour est assuré par l'inversion du sens de fonctionnement du servomoteur électrique à la fin du freinage.

Le piston d'actionneur 122 loge un piston plongeur 150 prolongé en direction du maître-cylindre 100 par un prolongement cylindrique 151 et repoussé par un ressort de rappel 152 contre le fond 123 du boîtier 121 du servomoteur, servant de butée au même titre que le piston d'actionneur 122 est appliqué contre le fond 123 du corps du servomoteur dans la position neutre de la figure 1. Le piston plongeur 150 est relié à une tige de commande 155, elle-même reliée à la pédale de frein PF. La tige de commande 155 est déplacée par une action sur la pédale de frein de manière à pousser le piston plongeur 150 dans les conditions qui seront décrites ensuite.

Le mouvement de la tige de commande 155 ou du piston plongeur 150 sont détectés par un capteur de mouvement 160 qui envoie un signal d'actionnement au circuit de commande 200 gérant le fonctionnement du servomoteur électrique 120 pour l'activer et commander le déplacement du piston d'actionneur 122.

Le piston d'actionneur 122 pousse directement sur la jupe 101b du piston primaire 101 pour ainsi pousser le piston primaire 101.

De façon générale, en fonctionnement normal, le système de freins de la figure 1 est actionné par une poussée exercée sur la pédale de frein PF qui déplace la tige de commande 155 et le piston plongeur 150. Le déplacement du piston plongeur ou de la tige de commande est détecté par le capteur 160 qui informe le circuit de commande 200. Celui-ci actionne le servomoteur 120 pour l'action de freinage. Le piston d'actionneur 122 est déplacé dans la direction A pour pousser le piston primaire 101 qui refoule d'abord le liquide dans le circuit de frein C puis comprime le liquide hydraulique de la chambre primaire 102 et fournit du liquide hydraulique sous pression au circuit C des freins de roues. Ce fonctionnement est le même que le maître-cylindre soit un maître-cylindre simple ou un maître-cylindre tandem avec un piston primaire, un piston secondaire, une chambre primaire et une chambre secondaire.

Au cours de cette action de freinage normale, le poussoir 141 n'est pas en contact du cylindre plongeur 150, un intervalle entre ces deux éléments étant géré par le circuit de commande 200 par le mouvement d'actionnement du piston primaire 101. La réaction sur la pédale est assurée au cours de ce mouvement par la réaction engendrée par le ressort de rappel 152.

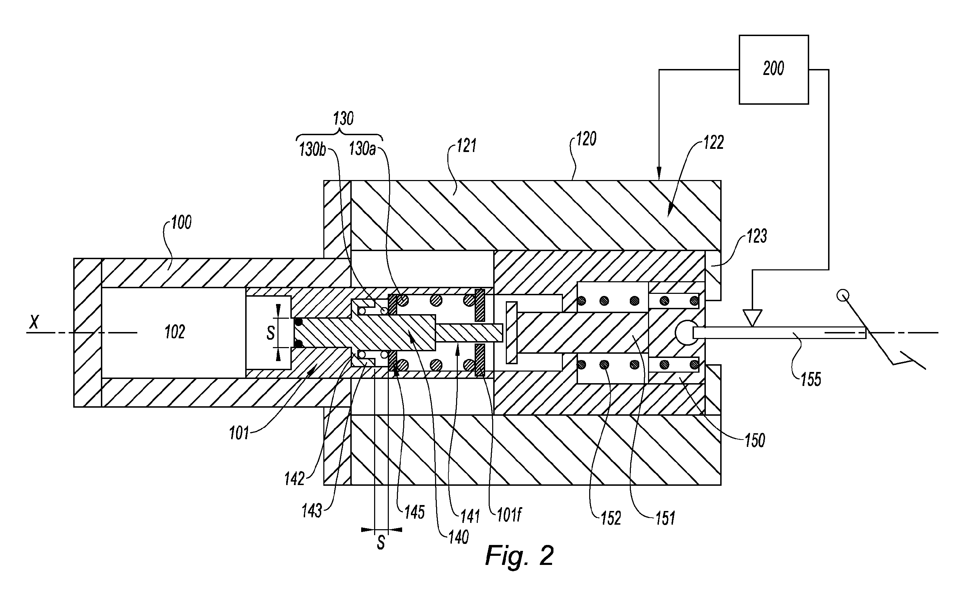

Le fonctionnement du système de freins des figures 1, 1A sera décrit de manière détaillée en même temps que le fonctionnement du second mode de réalisation représenté aux figures 2, 2A et ensuite les conditions de fonctionnement exceptionnelles de ce système de freins.

Les figures 2 et 2A montrent un second mode de réalisation du système de frein de véhicule à servomoteur électrique à piston de réaction hydraulique et compensation de traînée (drag) selon l'invention qui diffère du premier mode de réalisation en ce que le ressort de réaction 130 du piston de réaction hydraulique 140 est constitué d'un ressort principal 130a et d'un ressort auxiliaire 130b, les autres éléments identiques au premier mode de réalisation portent les mêmes références et leur description ne sera pas reprise.

Le ressort principal 130a est logé entre l'organe de retenue 133 solidaire de la jupe 101 b, près de l'extrémité extérieure de la jupe et un appui flottant 145 en forme de rondelle, coulissant dans la jupe 101b, et venant contre un épaulement 101h limitant le déplacement de l'appui flottant 145 dans le sens de la détente du ressort principal 130a (direction A).

Le ressort auxiliaire 130b est installé entre le dos de l'appui flottant 145 et la butée 142 du piston de réaction hydraulique 140. La butée 142 est, dans cet exemple, munie d'une collerette d'écartement 143 destinée à venir en appui contre le dos de l'appui flottant 145 pour limiter la compression et l'écrasement du ressort auxiliaire 130b et transmettre directement la poussée du piston de réaction 140 sur l'appui flottant 145.

La distance S qui sépare le bord de la collerette 143 du dos de l'appui flottant 145 est la course que le piston de réaction 140 peut effectuer en comprimant le ressort auxiliaire 103b. La distance S représente le mouvement relatif entre le piston primaire 101 et le piston de réaction 140 au début d'une action de freinage permettant la compensation de la traînée.

Le ressort principal 130a et le ressort auxiliaire 130b constituant le ressort de réaction 130 sont combinés en série, c'est-à-dire agissant l'un sur l'autre. La dureté du ressort auxiliaire 130b est relativement faible et sa précontrainte est par exemple de l'ordre de 30 N alors que la dureté du ressort principal 130a est importante. Cela signifie que si une poussée est exercée dans la direction B sur le piston de réaction hydraulique 140, le piston primaire 101 étant considéré comme fixe, le piston de réaction 140 comprime d'abord le ressort auxiliaire 130b jusqu'à ce que la collerette périphérique 143 soit contre le dos de l'appui flottant 145. A ce moment, le ressort auxiliaire 130b n'intervient plus et l'effort est directement transmis par la butée 142 et la collerette périphérique 143 du piston de réaction 140 sur l'appui flottant 145 de sorte qu'à partir de ce moment, le ressort principal 130a sera comprimé.

Il est à remarquer que, comme à la figure 1, dans la figure 2, l'extrémité du poussoir 141 du piston de réaction hydraulique 140 n'est pas en contact avec la face avant du piston plongeur 150 lorsque le système de freins est au repos ou fonctionne normalement, hors freinage exceptionnel.

La figure 3 est un diagramme montrant les différentes courbes de fonctionnement d'un système de freins à servomoteur.

Ces diagrammes représentent en abscisses la force appliquée à la tige de commande 155 par l'intermédiaire de la pédale de frein PF. Cette force est représentée en unités N. Les ordonnées représentent la pression régnant dans la chambre primaire 102 du maître-cylindre 100, qu'il s'agisse d'un maître-cylindre simple ou d'un maître-cylindre tandem. Cette pression est indiquée en bars.

Toutes les courbes représentées ont en commun une phase initiale PH1 au cours de laquelle la force appliquée sur la tige de commande 155 ne se traduit par aucune élévation de pression dans le maître-cylindre 100. Cette phase initiale correspond à la compensation des jeux dans la chaîne cinématique du système de freins.

A la fin de cette première phase, il y a le cas échéant un saut PH2 correspondant au passage brusque d'une pression nulle (par rapport à la pression extérieure) dans le maître-cylindre 100 à une pression d'un niveau supérieur, voire relativement haut.

Trois cas sont envisagés :
- le premier cas (courbe C1) est celui d'une absence de dispositif créant un saut dans le servofrein. Il s'agit par exemple d'un mode de réalisation comme celui de la figure 1. Le servofrein 120 commence à agir directement à partir de la pression nulle dans le maître-cylindre. La pression augmente ensuite ; le segment de droite correspond à la montée en pression assurée par le servofrein. L'action du servofrein se limite par exemple à une pression de 100 bars.
- La seconde courbe C2 en trait plein est la courbe correspondant à un servofrein connu. La pression de saut est relativement faible, de l'ordre de 15 à 20 bars. A la fin de la phase de saut PH2, la pression dans le maître-cylindre augmente sous l'action du servomoteur (phase PH3). A la fin de l'intervention du servomoteur (par exemple à une pression de 100 bars), le complément de poussée ne peut être fourni que par une action forte sur la pédale de frein. Le segment PH4 prolongeant le segment droit correspondant à la phase PH3 d'intervention du servomoteur, est une droite D4 plus inclinée combinant les deux actions, celle du servomoteur qui est alors limitée à son intervention maximale et l'action progressive et forte exercée par le conducteur sur la pédale de frein PF.
- La courbe C3 en traits interrompus représente le fonctionnement du système de la figure 2. Le saut PH2 est important et dépend la dureté du ressort principal 130a. Après la période de saut PH2, il y a la période d'intervention du servomoteur PH3 jusqu'à une pression maximale usuelle dans le maître-cylindre qui est généralement de 100 bars. Ensuite, il y a l'action combinée de l'intervention du servofrein et de la forte poussée exercée sur la pédale de frein (phase PH4).

En l'absence d'une forte poussée, c'est-à-dire dans les conditions normales de freinage, l'action se limite à la phase PH3 d'intervention du servomoteur.

Le fonctionnement du système de freins 2, 2A sera décrit ci-après de manière plus détaillée à l'aide des figures 4 à 10 correspondant à ce second mode de réalisation, le fonctionnement du premier mode de réalisation, plus simple, s'en déduisant comme cela sera expliqué.

Selon la figure 4, partant de la position initiale, au repos, des différents éléments de la combinaison, le circuit de commande 200 qui détecte une amorce de déplacement de la tige de commande 155 actionne le servomoteur 120 pour que le piston d'actionneur 122 compense les jeux de la chaîne cinématique et hydraulique en poussant le piston primaire 101. Cette course est relativement faible. Pendant cette course, le piston plongeur 150 reste appuyé contre le fond 123 du corps 121 du servomoteur électrique 120.

Ce mouvement n'a pas d'influence sur la course de la pédale. Un certain volume de liquide de frein est déplacé par le mouvement du piston d'actionneur sous une pression faible, par exemple de l'ordre de 2 à 3 bars et réduit comme indiqué le jeu mécanique ainsi que le jeu hydraulique en assurant un pré-remplissage des cylindres de freins. Cette situation et position des éléments correspond au début de la compensation de la traînée.

La figure 5 montre la fin du mouvement de compensation de la traînée. Le piston d'actionneur 122 a repoussé le piston primaire 102 en générant une élévation de pression dans la chambre primaire 102 qui a déplacé le piston de réaction 140 exposé à la pression dans la chambre primaire 102 par rapport au piston primaire 102 dans la direction B. Ce mouvement a comprimé le ressort auxiliaire 130b jusqu'à ce que la collerette d'écartement 143 soit en appui contre le dos de l'appui flottant 145. Le ressort auxiliaire 130b est alors comprimé au maximum des possibilités autorisées par le seuil S. L'appui flottant 145 est toujours appliqué contre l'épaulement 144 dans la chambre extérieure 101c. Dans cette phase, le ressort 130a n'est pas comprimé. Le conducteur commence à appuyer sur la pédale. L'asservissement géré par la commande 2 fait que le piston de réaction 140 n'est pas en contact par son poussoir 141 avec l'avant du piston plongeur 150.

La figure 6 montre la phase du saut. La poursuite de l'action du servomoteur 120, commandé par le maintien de la poussée sur la pédale de frein PF et le déplacement de la tige de commande 155 avec le piston plongeur 150. Ce mouvement est détecté par le capteur 160. Le piston d'actionnement 122 poursuit son mouvement de mise en pression de la chambre primaire 102 en poussant directement sur le piston primaire 101. La pression de la chambre primaire 102 s'exerçant sur le piston de réaction hydraulique 140, celui-ci comprime le ressort principal 130a sur une distance dépendant de la raideur du ressort principal 130a. Le ressort 130a est choisi pour offrir la raideur souhaitée, c'est-à-dire une hauteur du niveau de pression à la fin du saut (voir figure 3).

Comme le montre la figure 6, le saut représente une course relativement faible du piston de réaction 140 par rapport au piston primaire 101. Il n'y a pas de contact entre le poussoir 141 et le piston plongeur 150. Le piston plongeur 150 est soumis à la réaction du ressort de rappel 152 qui crée pour la tige de commande et le pied appuyé sur la pédale de frein, la sensation de pédale, c'est-à-dire la sensation de la réaction du circuit de frein.

Selon la figure 7, au cours de cette action du servofrein 120, le conducteur exerce une forte poussée sur la pédale PF, cette poussée est transmise par la tige de commande 155 au piston plongeur 150 qui comprime le ressort de rappel 152 et touche l'extrémité du poussoir axial 141 de sorte que cette poussée se traduit par une compression du liquide dans la chambre primaire 102 par l'avancée du piston de réaction hydraulique 140, le piston d'actionneur 122 maintenant le piston primaire 101 en appui. Au cours de cette phase, le conducteur perçoit par la pédale de frein PF, l'effort composé de la réaction du ressort de rappel 152, augmenté de la force du piston de réaction 140 (sa surface exposée à la pression de la chambre primaire 102 multipliée par cette pression).

Selon la figure 8, si l'action sur la pédale de frein PF est modérée, le piston d'actionneur 122 fait avancer le piston primaire 101 produisant une poussée sur le piston de réaction hydraulique 140 qui comprime un peu plus le piston principal 130b. La course différentielle Δl entre le piston d'actionneur 122 et le piston plongeur 150 est contrôlée et utilisée pour l'asservissement par le circuit de commande 200. L'effort perçu par le conducteur au niveau de la pédale de frein PF et celui du ressort de rappel 152 augmenté de la force hydraulique exercée sur le piston de réaction 140 diminué de la force de compression du ressort principal 130a, compression fournie par le piston d'actionneur 122.

La figure 9 montre la situation de la figure précédente si le conducteur quitte rapidement la pédale de frein. Comme le piston de réaction 140 est retenu dans le piston primaire 101 et ce dernier est retenu par le piston d'actionneur 122, il n'y a pas de réaction importante qui serait perçue par le conducteur. En effet, le piston de réaction 140 ne peut reculer (direction B) au-delà de la venue en butée de son épaulement 144 contre la butée 101f du piston primaire 101.

La figure 10 montre le fonctionnement de secours en cas de défaillance du servomoteur électrique 120. La tige de commande 155 transmet directement l'effort au piston de réaction 140 par le piston plongeur 150, en contact direct avec le piston de réaction 140. L'enfoncement du piston de réaction 140 dans la chambre primaire 102 crée une pression suffisante dans le circuit de frein pour ce fonctionnement de secours.

Pour ces niveaux de pression, le ressort principal 130a n'est pas comprimé par le mouvement différentiel entre le piston de réaction hydraulique 140 et le piston primaire 101.

Le fonctionnement du système de freins selon le mode de réalisation des figures 1A, 1B correspond pratiquement à celui décrit ci-dessus pour le système de freins des figures 2, 2A : la phase initiale représentée à la figure 4 s'applique également au premier mode de réalisation. Seule la phase de fonctionnement représentée à la figure 5 correspondant à la compensation de la traînée n'existe pas. Ensuite, le fonctionnement est le même que celui représenté aux figures 6 à 10.

La présente invention s'applique à l'industrie des systèmes de freins de véhicules.

### NOMENCLATURE

- 100: Maître-cylindre / Maître-cylindre tandem
- 101: Piston / Piston primaire
101a Corps
101b Jupe / Jupe cylindrique
101c Chambre extérieure
101d Alésage axial traversant
101e Fond de la chambre extérieure
101f Butée du piston primaire
101h Epaulement
- 102: Chambre / Chambre primaire
- 103: Bride du maître-cylindre
- 120: Servomoteur électrique
- 121: Corps du servomoteur
- 122: Piston d'actionneur
- 123: Fond du corps du servomoteur
- 130: Ressort de réaction
130a Ressort principal
130b Ressort auxiliaire
- 131: Extrémité du ressort de réaction
- 132: Extrémité du ressort de réaction
- 133: Organe de retenue
- 140: Butée de réaction hydraulique
- 141: Poussoir axial
- 142: Butée
- 143: Collerette d'écartement
- 144: Epaulement du poussoir
- 145: Appui flottant
- 150: Piston plongeur
- 151: Prolongement cylindrique
- 152: Ressort de rappel
- 155: Tige de commande
- 160: Capteur de déplacement
- 200: Circuit de commande

## Revendications

1. Système de freins de véhicule à servomoteur électrique comprenant :
- un maître-cylindre (100) équipé d'un piston primaire (101) délimitant dans celui-ci une chambre primaire (102), reliée par un circuit de liquide de frein (C) aux cylindres de freins de roues, et
- un servomoteur électrique (120) avec un piston d'actionneur (122) agissant sur le piston primaire (101),
- une tige de commande (155) reliée à la pédale de frein (PF) et déplaçant un piston plongeur (150) pour actionner le maître-cylindre (100) avec le cas échéant l'assistance du servomoteur électrique (120),
- le mouvement de la tige de commande (155) étant détecté par un capteur (160) qui informe le circuit de commande (200) du servomoteur électrique (120),
- le maître-cylindre (100), le servomoteur (120) et la tige de commande (155) étant alignés sur un axe (xx), où
- le piston primaire (101) délimitant la chambre primaire (102) dans le maître-cylindre (100) est formé d'un corps (101a)
* se prolongeant, côté extérieur du maître-cylindre, par une jupe cylindrique (101b) formant une chambre extérieure (101c), logeant un ressort de réaction (130) dont une extrémité (131) est appuyée contre un organe de retenue (133) solidaire de la jupe (101b),
* comportant un alésage axial traversant (101d), reliant le fond de la chambre extérieure (101c) et la chambre primaire (102),
- le piston d'actionneur (121) coopérant directement avec la jupe (101b) pour pousser le piston primaire (101),
- un piston de réaction hydraulique (140),
* logé dans l'alésage (101d) du corps du piston primaire (101),
* portant solidairement, côté extérieur, un poussoir axial (141),
** muni d'une butée (142) contre laquelle s'appuie l'autre extrémité (132) du ressort de réaction (130), **caractérisé en ce que**
** cette butée (142) s'appuie contre le fond (101e) de la chambre extérieure (101c) pour pousser le piston primaire (101) ou être poussée par celui-ci.

2. Système de freins de véhicule à servomoteur électrique selon la revendication 1,
**caractérisé en ce que**
le ressort de réaction (130) se compose d'un ressort principal (130a) et d'un ressort auxiliaire (130b) combinés en série,
séparés l'un de l'autre par un appui flottant (145), mobile par rapport à une butée (101f) du piston primaire (101) pour limiter la course de détente du ressort principal (130a),
le ressort auxiliaire (130b) étant de dureté réduite par rapport à celle du ressort principal pour être comprimé avant le ressort principal (130a).

3. Système de freins de véhicule à servomoteur électrique selon la revendication 1,
**caractérisé en ce que**
l'organe de retenue (133) est un disque traversé par le poussoir (141).

4. Système de freins de véhicule à servomoteur électrique selon les revendications 1 et 2,
**caractérisé en ce que**
le poussoir (141) comporte un épaulement (144) pour coopérer avec l'organe de retenue (133) pour définir une position extrême de fin de course du piston de réaction (140).

5. Système de freins de véhicule à servomoteur électrique selon la revendication 2,
**caractérisé en ce que**
la butée (142) comporte une collerette (143) coopérant avec l'appui flottant 145 à la compression du ressort auxiliaire (130b) pour limiter la compression du ressort auxiliaire (130b) et s'appuyer alors directement contre l'appui flottant (145).

## Patentansprüche

1. Bremssystem eines Fahrzeugs mit elektrischem Servomotor, umfassend:
- einen Hauptzylinder (100), der mit einem Primärkolben (101) ausgestattet ist, der in diesem eine Primärkammer (102) begrenzt, die durch einen Bremsflüssigkeitskreis (C) mit den Bremszylindern von Rädern verbunden ist, und
- einen elektrischen Servomotor (120) mit einem Betätigungskolben (122), der auf den Primärkolben (101) einwirkt,
- eine Steuerstange (155), die mit dem Bremspedal (PF) verbunden ist und einen Plungerkolben (150) verschiebt, um den Hauptzylinder (100) gegebenenfalls mit Unterstützung des elektrischen Servomotors (120) zu betätigen,
- wobei die Bewegung der Steuerstange (155) durch einen Sensor (160) erfasst wird, der die Steuerschaltung (200) des elektrischen Servomotors (120) informiert,
- wobei der Hauptzylinder (100), der Servomotor (120) und die Steuerstange (155) auf einer Achse (xx) ausgerichtet sind, wobei
- der Primärkolben (101), der die Primärkammer (102) in dem Hauptzylinder (100) begrenzt, von einem Körper (101a) gebildet ist, der sich auf der Außenseite des Hauptzylinders durch eine zylindrische Schürze (101b) verlängert, die eine äußere Kammer (101c) bildet, in der eine Reaktionsfeder (130) angeordnet ist, deren eines Ende (131) gegen ein mit der Schürze (101b) verbundenes Halteelement (133) abgestützt ist,
umfassend eine durchgehende Axialbohrung (101d), die den Boden der äußeren Kammer (101c) und die Primärkammer (102) verbindet,
- wobei der Betätigungskolben (121) direkt mit der Schürze (101b) zusammenwirkt, um den Primärkolben (101) anzuschieben,
- einen hydraulischen Reaktionskolben (140), der in der Bohrung (101d) des Körpers des Primärkolbens (101) angeordnet ist,
auf der Außenseite einen Axialschieber (141) trägt, der mit einem Anschlag (142) versehen ist, gegen den sich das andere Ende (132) der Reaktionsfeder (130) abstützt,
**dadurch gekennzeichnet, dass**
sich dieser Anschlag (142) gegen den Boden (101e) der äußeren Kammer (101c) abstützt, um den Primärkolben (101) anzuschieben oder von diesem angeschoben zu werden.

2. Bremssystem eines Fahrzeugs mit elektrischem Servomotor nach Anspruch 1,
**dadurch gekennzeichnet, dass**
die Reaktionsfeder (130) aus einer Hauptfeder (130a) und einer Hilfsfeder (130b), die in Serie angeordnet sind, besteht,
getrennt durch eine schwebende Auflage (145), die in Bezug zu einem Anschlag (101f) des Primärkolbens (101) beweglich ist, um den Entspannungsweg der Hauptfeder (130a) zu begrenzen,
wobei die Hilfsfeder (130b) von geringerer Härte im Vergleich mit jener der Hauptfeder ist, um vor der Hauptfeder (130a) zusammengedrückt zu werden.

3. Bremssystem eines Fahrzeugs mit elektrischem Servomotor nach Anspruch 1
**dadurch gekennzeichnet, dass**
das Halteelement (133) eine vom Schieber (141) durchquerte Scheibe ist.

4. Bremssystem eines Fahrzeugs mit elektrischem Servomotor nach den Ansprüchen 1 und 2,
**dadurch gekennzeichnet, dass**
der Schieber (141) einen Absatz (144) umfasst, um mit dem Halteelement (133) zusammenzuwirken, um eine äußerste Anschlagposition des Reaktionskolbens (140) zu definieren.

5. Bremssystem eines Fahrzeugs mit elektrischem Servomotor nach Anspruch 2,
**dadurch gekennzeichnet, dass**
der Anschlag (142) einen Kragen (143) umfasst, der mit der schwebenden Auflage (145) beim Zusammendrücken der Hilfsfeder (130b) zusammenwirkt, um das Zusammendrücken der Hilfsfeder (130b) zu begrenzen und sich nun direkt an der schwebenden Auflage (145) abzustützen.

## Claims

1. Electric-servomotor vehicle brake system comprising:
- a master cylinder (100) equipped with a primary piston (101) delimiting therein a primary chamber (102), connected by a brake fluid circuit (C) to the wheel brake cylinders, and
- an electric servomotor (120) with an actuator piston (122) acting on the primary piston (101),
- a control rod (155) connected to the brake pedal (PF) and moving a plunger piston (150) to actuate the master cylinder (100) with, when applicable, the assistance of the electric servomotor (120),
- the movement of the control rod (155) being detected by a sensor (160) which informs the control circuit (200) of the electric servomotor (120),
- the master cylinder (100), the servomotor (120) and the control rod (155) being aligned on an axis (xx),
wherein
- the primary piston (101) delimiting the primary chamber (102) in the master cylinder (100) is formed by a body (101a)
* extended, on the outer side of the master cylinder, by a cylindrical skirt (101b) forming an outer chamber (101c), housing a reaction spring (130) of which one end (131) is pressed against a retaining member (133) secured to the skirt (101b),
* comprising an axial through-bore (101d), connecting the end wall of the outer chamber (101c) and the primary chamber (102),
- the actuator piston (121) cooperating directly with the skirt (101b) to push the primary piston (101),
- a hydraulic reaction piston (140),
* housed in the bore (101d) of the body of the primary piston (101),
* integrally bearing, on the outer side, an axial pusher (141),
** provided with a stop (142) against which the other end (132) of the reaction spring (130) bears,
**characterized in that**
** this stop (142) bears against the end wall (101e) of the outer chamber (101c) to push the primary piston (101) or be pushed by the latter.

2. Electric-servomotor vehicle brake system according to Claim 1,
**characterized in that**
the reaction spring (130) is composed of a main spring (130a) and of an auxiliary spring (130b) combined in series,
separated from one another by a floating support (145), which is movable with respect to a stop (101f) of the primary piston (101) to limit the expansion travel of the main spring (130a),
the auxiliary spring (130b) being of reduced hardness with respect to the main spring in order to be compressed before the main spring (130a).

3. Electric-servomotor vehicle brake system according to Claim 1,
**characterized in that**
the retaining member (133) is a disc through which the pusher (141) passes.

4. Electric-servomotor vehicle brake system according to Claims 1 and 2,
**characterized in that**
the pusher (141) comprises a shoulder (144) to cooperate with the retaining member (133) to define an extreme end-of-travel position of the reaction piston (140).

5. Electric-servomotor vehicle brake system according to Claim 2,
**characterized in that**
the stop (142) comprises a collar (143) cooperating with the floating support (145) in compressing the auxiliary spring (130b) to limit the compression of the auxiliary spring (130b) and then bear directly against the floating support (145).
